(19) **Europäisches Patentamt**
**European Patent Office**
**Office européen des brevets**

(11) **EP 2 092 703 B1**

(12) **FASCICULE DE BREVET EUROPEEN**

(45) Date de publication et mention
de la délivrance du brevet:
**12.05.2010 Bulletin 2010/19**

(51) Int Cl.:
***H04L 12/58*** (2006.01)   ***H04L 29/06*** (2006.01)

(21) Numéro de dépôt: **07858490.1**

(22) Date de dépôt: **02.10.2007**

(86) Numéro de dépôt international:
**PCT/FR2007/052057**

(87) Numéro de publication internationale:
**WO 2008/047024 (24.04.2008 Gazette 2008/17)**

(54) **CONTRÔLE DE MESSAGE A TRANSMETTRE DEPUIS UN DOMAINE D'ÉMETTEUR VERS UN DOMAINE DE DESTINATAIRE**

ÜBERPRÜFUNG VON NACHRICHTEN ZUR ÜBERTRAGUNG VON EINER SENDERDOMÄNE AN EINE EMPFÄNGERDOMÄNE

CHECKING OF MESSAGE TO BE TRANSMITTED FROM A SENDER DOMAIN TO AN ADDRESSEE DOMAIN

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **16.10.2006 FR 0654294**

(43) Date de publication de la demande:
**26.08.2009 Bulletin 2009/35**

(73) Titulaire: **FRANCE TELECOM**
**75015 Paris (FR)**

(72) Inventeurs:
• **BATTISTELLO, Patrick**
  **22700 Perros-Guirec (FR)**

• **LOUDIER, Quentin**
  **22560 Pleumeur Bodou (FR)**
• **GOURHANT, Yvon**
  **22300 Lannion (FR)**

(74) Mandataire: **Bloch & Bonnétat**
**23bis, rue de Turin**
**75008 Paris (FR)**

(56) Documents cités:
**EP-A- 1 583 319    WO-A-2005/025177**
**FR-A1- 2 877 114**

**Description**

La présente invention concerne un contrôle de message à transmettre depuis un domaine d'émetteur vers un domaine de destinataire via un réseau de télécommunications.

Les réseaux de télécommunications, comme l'internet, transmettent des données via une infrastructure commune entre différentes entités de service, telles qu'un serveur web ou un serveur de messagerie électronique. Ces réseaux subissent des attaques à destination de cibles professionnelles, administratives ou individuelles. Par exemple, une attaque consiste à envoyer vers le plus grand nombre de destinataires possible des messages indésirables qu'ils n'ont pas sollicités, tels que des "Spam" pour des courriers électroniques ou des "Spit" pour des appels téléphoniques sur internet. Le qualificatif "indésirable" est pris au sens large et s'applique à la fois à l'identité de l'expéditeur du message, qui peut être authentique ou falsifiée, et au contenu du message.

Par exemple, le développement du Spam repose sur les facteurs suivants :

-   la faiblesse des protocoles utilisés sur internet, tels que le protocole SMTP ("Simple Mail Transfer Protocol" en anglais) le plus utilisé pour le transfert de courrier électronique et qui n'incorpore pas de fonctions d'authentification de l'émetteur d'un courrier par exemple;
-   l'augmentation de la puissance des ordinateurs qui peuvent envoyer des messages indésirables en masse de façon automatique sur une période très courte;
-   l'augmentation du nombre de réseaux sur internet et de la connectivité entre les réseaux, ce qui présente un très grand nombre de cibles à des attaquants qui peuvent s'abriter derrière des réseaux relativement permissifs ou hors de portée légale ou administrative des réseaux cibles.

Par ailleurs, un domaine d'émetteur peut relayer un message émis par un expéditeur qui est connecté au domaine d'émetteur et qui n'est pas rattaché administrativement ou par contrat au domaine émetteur, vers un domaine de destinataire. Par exemple, un expéditeur itinérant connecté à un domaine d'émetteur "émetteur.fr" envoie un courrier électronique dont l'adresse d'origine est "user@expéditeur.fr" et dont l'adresse de destination est "user2@destinataire.fr". Actuellement, le domaine d'émetteur n'est pas capable de déterminer si l'adresse de l'expéditeur est valide, c'est-à-dire si l'adresse de l'expéditeur est effectivement attribuée dans le domaine d'expéditeur "expéditeur.fr" et si l'expéditeur dispose des droits pour envoyer un message depuis cette adresse, puisque le domaine d'émetteur ne gère pas les identités, c'est à dire les adresses logiques "expéditeur.fr". Cette absence de contrôle est souvent utilisée par des attaquants pour émettre des messages sous une fausse identité depuis un domaine auquel les attaquants ont accès ou bien via une machine corrompue dans un domaine légitime.

Une solution à cette absence de contrôle consiste à bloquer dans le domaine d'émetteur l'envoi de tout message dont l'adresse d'origine n'est pas rattachée au domaine d'émetteur, mais cette solution est trop limitative, notamment pour la mobilité des services de "voix sur IP" voIP ("voice over Internet Protocol" en anglais) avec lesquels un terminal itinérant peut utiliser un relais tiers tel qu'un domaine d'émetteur pour établir un appel téléphonique.

Différents procédés ont été développés pour lutter contre l'envoi de messages indésirables.

Des procédés proposent d'analyser le contenu des messages en fonction de certains critères, tels que des mots clés, ou des signatures de message, et d'en déduire des messages potentiellement indésirables.

D'autres procédés consistent à détecter la source d'où proviennent des messages indésirables en fonction de comportements de trafic et éventuellement d'analyses de signature, de manière à bloquer le trafic des messages indésirables au plus près de la source détectée.

Selon des troisièmes procédés, les sources de trafic sont classées en différentes catégories en fonction de la réputation de confiance qu'elles présentent, par exemple à l'aide de listes noires ou blanches d'adresses réputées dangereuses ou non.

Selon des quatrièmes procédés, l'authenticité d'un utilisateur d'un service sur internet est contrôlée afin de responsabiliser les fournisseur d'accès à internet ou des domaines d'émetteur depuis lesquels des messages sont envoyés, par exemple en certifiant l'identité fournie par l'utilisateur ou en obligeant l'utilisateur à réussir un test avant d'envoyer un message.

Des cinquièmes procédés reposent sur l'envoi préalable d'une notification par l'expéditeur d'un message à un destinataire, ce dernier devant accepter la notification pour recevoir le message.

Tous ces procédés présentent l'inconvénient qu'un message est contrôlé dans le domaine de destinataire recevant en dernier lieu les messages sans que ce dernier interagisse avec le domaine d'émetteur du message, le domaine de destinataire ne pouvant alors pas faire confiance aux contrôles réalisés en amont. Certains procédés présentent en outre l'inconvénient de la nécessité de déployer une infrastructure à clé publique PKI ("Public Key Infrastructure" en anglais).

Il est d'autre part connu du document WO 2005/025177 d'authentifier l'émetteur d'un message par interaction entre l'émetteur et le destinataire.

Pour remédier aux inconvénients évoqués ci-dessus, un procédé selon l'invention pour contrôler un message à transmettre par un terminal d'expéditeur connecté à un domaine d'émetteur vers un domaine de destinataire, l'expéditeur étant rattaché à un domaine d'expéditeur, est caractérisé en ce qu'il comprend les étapes suivantes, suite à une authentification de l'expéditeur du message par le domaine d'expéditeur :

transmettre des données de domaine d'expéditeur depuis le domaine d'expéditeur au domaine d'émetteur et une requête de notification contenant lesdites données depuis le domaine d'émetteur au domaine de destinataire,
en réponse à la réception de la requête de notification, transmettre une requête de confirmation de notification contenant lesdites données depuis le domaine de destinataire au domaine d'expéditeur,
si les données contenues dans la requête de confirmation de notification sont identiques aux données transmises par le domaine d'expéditeur suite à l'authentification de l'expéditeur, retransmettre cette requête depuis le domaine d'expéditeur au domaine d'émetteur, et
en réponse à la réception de la requête de confirmation de notification, transmettre depuis le domaine d'émetteur une réponse de confirmation de notification au domaine de destinataire.

Le message peut être ensuite transmis du domaine émetteur vers au moins un terminal de destinataire qui a fourni un accord définitif au domaine de destinataire pour recevoir le message.

L'invention contrôle avantageusement tout message transmis par un expéditeur depuis un domaine d'émetteur vers un domaine de destinataire en faisant interagir le domaine d'expéditeur auquel est rattaché l'expéditeur avec les domaines d'émetteur et de destinataire. L'invention engendre ainsi une responsabilisation du domaine d'émetteur qui intervient dans le contrôle d'un message émis depuis ce dernier et une responsabilisation du domaine d'expéditeur qui doit authentifier l'expéditeur du message. Les domaines d'émetteur et d'expéditeur s'engagent alors à ce que le message ne soit pas indésirable.

Par ailleurs, le procédé selon l'invention est indépendant de l'architecture du réseau dans lequel il est implémenté. En particulier, le procédé selon l'invention offre une implémentation compatible avec des protocoles existants d'envoi de messages, tels que le protocole SMTP pour les applications de courrier électronique. D'autre part, la vérification de l'origine du message peut être faite par le domaine de destinataire, quel que soit le nombre de serveurs de relais qui ont retransmis le message vers le domaine de destinataire.

Selon une caractéristique de l'invention, l'authentification de l'expéditeur du message comprend en outre une authentification de l'identité de l'expéditeur et une validation de droits nécessaires pour revendiquer l'identité par le domaine d'expéditeur, suite à un échange de données entre le domaine d'expéditeur et le terminal d'expéditeur.

Avantageusement, l'invention privilégie un contrôle sur l'origine du message plutôt que sur le contenu du message, en faisant notamment intervenir le domaine d'expéditeur qui authentifie l'identité de l'expéditeur et les droits nécessaires pour revendiquer l'identité. En effet, les contrôles basés sur des algorithmes de filtrage filtrant le contenu de message peuvent être contournés par un attaquant dès lors que celui-ci connaît les algorithmes de filtrage. En outre, la plupart des messages dont l'origine est falsifiée sont généralement indésirables alors qu'à l'inverse, la plupart des messages dont l'origine est authentique ne sont pas indésirables.

Selon une autre caractéristique de l'invention, après réception de la réponse de confirmation de notification, le domaine de destinataire peut générer une liste de refus, une liste d'accord définitif et une liste d'accords provisoires incluant des identificateurs des destinataires pour lesquels la réception du message est respectivement refusée, accordée définitivement et accordée provisoirement, et transmet une réponse de notification contenant les listes au domaine d'émetteur.

Selon encore une autre caractéristique de l'invention, si la liste d'accord définitif inclut au moins un identificateur de destinataire, la réponse de notification contient une clé définitive et après avoir reçu la réponse de notification, le domaine d'émetteur transmet un message authentifié contenant le message et la clé définitive au domaine de destinataire afin que ce dernier transmette le message à au moins un terminal d'un destinataire dont l'identificateur est inclus dans la liste d'accord définitif, après avoir validé la clé définitive contenue dans le message authentifié.

Le contrôle de message selon l'invention implique au plus tôt le destinataire d'un message dans le choix de recevoir ledit message afin d'obtenir préalablement à toute transmission de message au domaine de destinataire, l'accord explicite ou implicite du destinataire pour recevoir le message, sous réserve que l'identité de l'expéditeur du message ait été préalablement confirmée. L'identité de l'expéditeur correspond généralement à une adresse logique dont le format est propre au protocole considéré.

Par ailleurs, le contrôle de message selon l'invention réduit le volume de messages inutiles ou indésirables circulant dans le réseau de télécommunications et encombrant des serveurs de relais de message, ainsi que les boîtes de réception des destinataires lorsque les messages sont des courriers électroniques.

L'invention concerne également un système pour contrôler un message à transmettre par un terminal d'expéditeur connecté à un domaine d'émetteur vers un domaine de destinataire, l'expéditeur étant rattaché à un domaine d'expéditeur. Le système est caractérisé en ce qu'il comprend :

EP 2 092 703 B1

- un moyen dans le domaine d'expéditeur pour transmettre des données de domaine d'expéditeur au domaine d'émetteur, suite à une authentification de l'expéditeur du message par le domaine d'expéditeur,
- un moyen dans le domaine d'émetteur pour transmettre une requête de notification contenant lesdites données au domaine de destinataire,
- un moyen dans le domaine de destinataire pour transmettre, en réponse à la réception de la requête de notification, une requête de confirmation de notification contenant lesdites données au domaine d'expéditeur,
- un moyen dans le domaine d'expéditeur pour retransmettre la requête de confirmation de notification au domaine d'émetteur, si les données contenues dans la requête de confirmation de notification sont identiques aux données transmises par le domaine d'expéditeur suite à l'authentification de l'expéditeur, et
- un moyen dans le domaine d'émetteur pour transmettre une réponse de confirmation de notification au domaine de destinataire, en réponse à la réception de la requête de confirmation de notification.

L'invention est également relative à une entité dans un domaine d'émetteur pour contrôler un message à transmettre par un terminal d'expéditeur connecté au domaine d'émetteur vers un domaine de destinataire, l'expéditeur étant rattaché à un domaine d'expéditeur, caractérisé en ce qu'elle est adaptée à :

transmettre une requête de notification contenant des données de domaine d'expéditeur au domaine de destinataire, après réception des dites données transmises par le domaine d'expéditeur suite à une authentification de l'expéditeur du message par le domaine d'expéditeur, afin qu'en réponse à la réception de la requête de notification, le domaine de destinataire transmette une requête de confirmation de notification contenant lesdites données au domaine d'expéditeur, et
à transmettre une réponse de confirmation de notification au domaine de destinataire en réponse à la réception de la requête de confirmation de notification qui a été retransmise depuis le domaine d'expéditeur au domaine d'émetteur si les données contenues dans la requête de confirmation de notification sont identiques aux données transmises par le domaine d'expéditeur suite à l'authentification de l'expéditeur.

L'invention est encore relative à une entité dans un domaine d'expéditeur pour contrôler un message à transmettre par un terminal d'expéditeur connecté à un domaine d'émetteur vers un domaine de destinataire, l'expéditeur étant rattaché au domaine d'expéditeur, caractérisé en ce qu'elle est adaptée à :

transmettre des données de domaine d'expéditeur au domaine d'émetteur, suite à une authentification de l'expéditeur du message par le domaine d'expéditeur, et
à retransmettre une requête de confirmation de notification contenant lesdites données au domaine d'émetteur, si les données contenues dans la requête de confirmation de notification sont identiques aux données transmises par le domaine d'expéditeur suite à l'authentification de l'expéditeur, ladite requête ayant été transmise par le domaine de destinataire au domaine d'expéditeur en réponse à la réception d'une requête de notification contenant les données transmises par le domaine d'émetteur au domaine de destinataire suite à l'authentification de l'expéditeur, afin que le domaine d'émetteur transmette une réponse de confirmation de notification au domaine de destinataire.

Enfin, l'invention se rapporte à des programmes d'ordinateur aptes à être mis en oeuvre pour partie dans une entité incluse dans un domaine d'émetteur et pour partie dans une entité incluse dans un domaine d'expéditeur pour contrôler un message transmis par un terminal d'expéditeur lié au domaine d'émetteur vers un domaine de destinataire, l'expéditeur étant rattaché au domaine d'expéditeur. Les programmes comprennent des instructions qui, lorsque lesdits programmes sont exécutés respectivement dans lesdites entités, réalisent les étapes selon le procédé de l'invention.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un bloc-diagramme schématique d'un système de contrôle selon l'invention réparti entre un domaine d'émetteur, un domaine d'expéditeur et un domaine de destinataire reliés entre eux via un réseau de télécommunications ; et
- la figure 2 est un algorithme d'un procédé selon l'invention pour contrôler un message à transmettre depuis le domaine d'émetteur vers le domaine de destinataire.

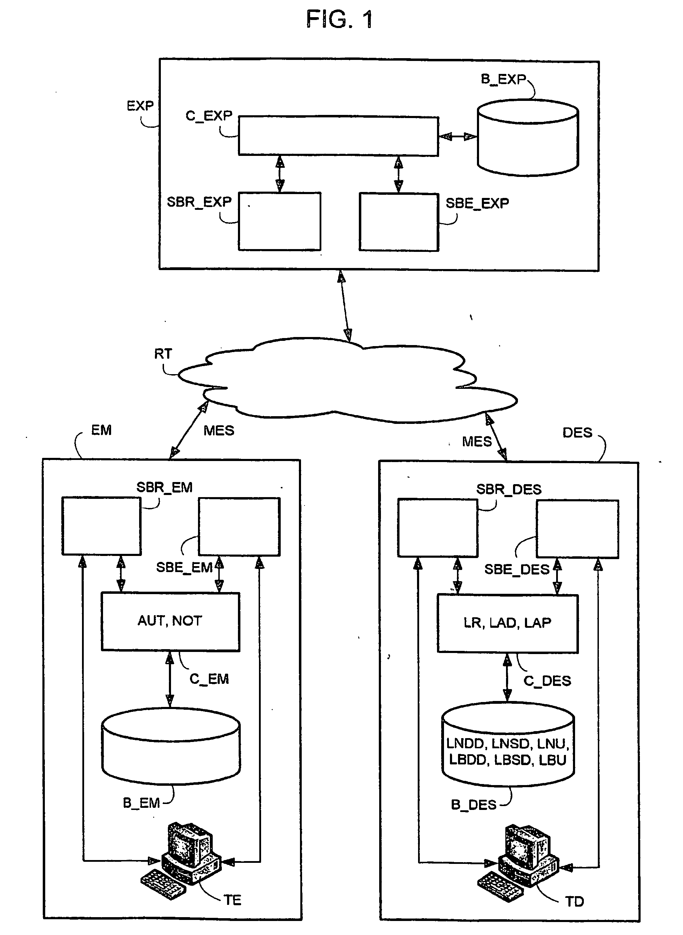

En référence à la figure 1, un système de télécommunications comprend un domaine d'émetteur EM, un domaine d'expéditeur EXP et un domaine de destinataire DES communiquant entre eux à travers un réseau de télécommunications RT.
Les domaines d'émetteur EM, d'expéditeur EXP et de destinataire DES comprennent respectivement un con-

4

trôleur de message d'émetteur C_EM, un contrôleur de message d'expéditeur C_EXP et un contrôleur de message de destinataire C_DES formant un système de contrôle selon l'invention.

Les domaines d'émetteur EM et de destinataire DES comprennent respectivement un ou plusieurs terminaux d'expéditeur TE et un ou plusieurs terminaux de destinataire TD. Chaque domaine EM, EXP, DES comprend un serveur de bordure en réception SBR_EM, SBR_EXP, SBR_DES et optionnellement un serveur de bordure en émission SBE_EM, SBE_EXP, SBE_DES qui sont positionnés à la frontière entre le domaine et le réseau de télécommunications RT. En variante, les serveurs de bordure en émission et en réception dans un domaine sont confondus. En outre, dans un domaine, le contrôleur de message peut être partiellement ou totalement intégré à l'un ou l'autre des serveurs de bordure en émission et en réception rattachés au domaine.

Les contrôleurs C_EM, C_EXP et C_DES sont respectivement liés à des bases de données B_EM, B_EXP et B_DES pour mémoriser des informations relatives à des requêtes et réponses échangées entre les contrôleurs.

Dans chacun des domaines d'émetteur EM, d'expéditeur EXP et de destinataire DES, les serveurs de bordure en émission SBE_EM, SBE_EXP, SBE_DES et en réception SBR_EM, SBR_EXP, SBR_DES implémentent des fonctions d'émission et de réception de messages et communiquent avec les terminaux d'expéditeur et les terminaux de destinataire, directement ou via au moins un serveur de relais.

Un serveur de bordure ou de relais est une entité capable de recevoir un message et de renvoyer ce message vers le terminal du destinataire du message ou une autre entité plus proche dudit terminal. Par exemple, dans des applications de courrier électronique relatives au domaine d'émetteur EM ou de destinataire DES, un serveur de relais est typiquement un agent de transfert de courrier MTA ("Mail Transfer Agent" en anglais) dans le coeur d'un réseau rattaché au domaine, et un serveur de bordure est typiquement un agent de distribution de courrier MDA ("Mail Delivery Agent" en anglais) en périphérie du réseau. Par exemple, dans des applications de "voix sur IP", les serveurs de bordure et de relais sont des "proxy". Dans tous les cas, ces serveurs disposent de tables d'acheminement statiques ou dynamiques pour relayer un message vers le destinateur souhaité.

Les domaines d'émetteur EM, d'expéditeur EXP et de destinataire DES peuvent être divisés en plusieurs sous-domaines. Dans ce cas, chaque sous-domaine comprend au moins un contrôleur de message et un serveur de bordure en réception et les contrôleurs de message des sous-domaines sont interconnectés de manière coopérative., afin de répartir la charge de traitement des messages.

Dans une variante, le domaine d'émetteur EM ne comprend pas de serveur de bordure en émission SBE_EM. Par exemple pour certaines applications de messagerie, des terminaux d'expéditeur TE sont reliés directement au réseau de télécommunications RT tel que l'internet et envoient des courriers électroniques sans recourir à un serveur de bordure en émission SBE ayant le rôle d'un relais de messagerie sous le contrôle du fournisseur d'accès à internet. Dans ce cas, le contrôleur de message d'émetteur C_EM intercepte les messages générés par les terminaux d'expéditeur et envoie lui-même des messages sortants vers le domaine de destinataire.

Dans une autre variante, le domaine d'émetteur EM présente une architecture fortement distribuée et un contrôleur de message d'émetteur C_EM est implémenté dans chaque terminal d'expéditeur.

Dans la suite de la description, un message d'expéditeur MES est un ensemble de données de nature quelconque transmis entre les domaines d'émetteur et de destinataire. Par exemple, un message contient un courrier électronique, ou des paquets d'un dialogue multimédia, tels que les paquets d'initialisation d'un dialogue. La transmission du message peut être de tout type, par exemple relative à un dialogue bidirectionnel ou un envoi de message unitaire, et indépendante des caractéristiques du réseau de transport utilisé, ce dernier pouvant être en mode connecté ou en mode non-connecté. Un message d'expéditeur MES est émis depuis un terminal d'expéditeur TE du domaine d'émetteur vers un ou plusieurs terminaux de destinataire TD du domaine de destinataire. Un terminal de destinataire peut être par exemple un ordinateur personnel, un mobile, ou un serveur de messagerie directement accessible par des terminaux.

Un message émis depuis le domaine d'émetteur vers le domaine de destinataire peut traverser un ou plusieurs domaines intermédiaires, en fonction de politiques d'acheminement entre les opérateurs relatifs aux domaines d'émetteur et de destinataire. Chaque domaine intermédiaire comprend un ou plusieurs serveurs de relais qui acheminent le message vers le domaine de destinataire. En général, pour les services de messagerie, le serveur de bordure en émission dans le domaine d'émetteur communique directement avec le serveur de bordure en réception dans le domaine de destinataire, sans passer par des domaines intermédiaires.

Optionnellement, la base de données B_DES liée au contrôleur de message de destinataire C_DES contient des listes d'adresses d'expéditeur, telles qu'une liste noire d'adresses interdites au sein du domaine de destinataire LNDD, une liste noire d'adresses interdites au sein d'un sous-domaine du domaine de destinataire LNSD et une liste noire d'adresses interdites par un utilisateur LNU, ou au moins l'une des listes précédentes. La base de données peut contenir également une liste blanche d'adresses autorisées au sein du domaine de destinataire LBDD, une liste blanche d'adresses autorisées au sein d'un sous-domaine du domaine de destinataire LBSD et une liste blanche d'adresses autorisées par un utilisateur LBU, ou au moins l'une des listes précédentes.

Le contrôleur de message d'émetteur C_EM et le contrôleur de message d'expéditeur C_EXP communiquent entre eux notamment pour authentifier de manière déportée l'expéditeur d'un message.

Dans une variante, l'expéditeur est rattaché administrativement ou contractuellement au domaine d'émetteur EM qui gère l'adresse de l'expéditeur ou du terminal d'expéditeur TE. Dans ce cas, les domaines d'émetteur EM et d'expéditeur EXP sont confondus.

Par exemple, si le domaine d'émetteur est "émetteur.fr" et que l'expéditeur est identifié sous l'adresse logique "user@émetteur.fr" alors l'authentification déportée n'est pas effectuée puisque le domaine d'expéditeur coïncide avec le domaine d'émetteur. Par contre, si l'expéditeur est identifié sous l'adresse logique "user@expéditeur.fr", alors l'authentification déportée est nécessaire puisque le domaine d'émetteur ne peut pas authentifier l'identité présentée par l'expéditeur et valider les droits nécessaires pour utiliser cette identité.

Le contrôleur de message d'émetteur C_EM génère des requêtes d'authentification AUT et de notification NOT comprenant des informations de routage et des éléments d'information suivants regroupés dans un ensemble de données appelé agrégat de notification et noté {Notification}.

<Expéditeur> : cet élément contient une adresse logique de l'expéditeur selon un format qui est propre à une application considérée. Généralement l'adresse logique est composée d'un identificateur qui désigne l'utilisateur ou le terminal utilisé et d'un nom de domaine auquel est rattaché administrativement ou contractuellement l'utilisateur. Par exemple, pour une application de courrier électronique, le format de cet élément est une adresse du type "identificateur@expéditeur.fr", et pour une application de téléphonie sur internet, le format de cet élément est une adresse du type "<sip:identificateur@domaine.fr>". Cette adresse peut faire partie de l'ensemble des adresses gérées par le domaine d'émetteur, ou bien être rattachée au domaine d'expéditeur. L'adresse logique contenue dans l'élément <Expéditeur> est différente d'une adresse de transport qui permet d'acheminer les paquets dans le réseau et qui est du type "w.x.y.z" pour un réseau IP. Optionnellement une adresse de transport peut compléter ou se substituer à l'adresse logique contenue dans l'élément <Expéditeur>.

<Emetteur> : cet élément contient l'adresse d'une entité qui génère une requête de notification ou d'authentification le cas échéant et qui traitera une réponse à la requête de notification ou d'authentification. Cette adresse peut être l'adresse propre du contrôleur de message d'émetteur C_EM, ou simplement le nom du domaine d'émetteur, ou encore la même adresse que celle contenue dans l'élément <Expéditeur> si le domaine d'expéditeur coïncide avec le domaine d'émetteur. Ainsi l'élément émetteur contient soit une adresse de type logique, soit une adresse de type transport.

{<Destinataire>} : cet élément, de type liste, contient l'ensemble des adresses des destinataires auxquels est envoyé le message, désignant généralement les adresses logiques des destinataires ou en variante les adresses de transport des terminaux de destinataire. Le format de chaque élément <Destinataire> est le même que celui de l'élément <Expéditeur> et la liste comporte au moins un élément. Par ailleurs, chaque requête de notification ne contient que des éléments <Destinataire> appartenant à un même domaine de destinataire. Par conséquent, si un expéditeur envoie un message vers des destinataires appartenant à différents domaines, le contrôleur de message d'émetteur C_EM génère autant de requêtes de notification que de domaines de destinataire différents.

<KI> : cet élément contient une clé initiale générée par le contrôleur de message d'émetteur C_EM pour identifier une requête d'authentification ou une requête de notification. Par exemple, les clés initiales générées pour chaque requête ont une même longueur.

Optionnellement, une requête de notification contient d'autres éléments utiles à l'application considérée comme par exemple les éléments d'information suivants. <Sujet> : cet élément indique l'objet du message pour guider le destinataire du message dans le cas où un accord explicite est demandé au destinataire pour accepter le message.

<Signature> cet élément contient une signature du message afin de garantir l'intégrité du contenu du message ou de son origine. La signature peut être réalisée par exemple en utilisant une clé secrète ou privée générée par le domaine d'émetteur. Pour être valide, la signature doit porter sur une partie du message qui n'est pas susceptible d'être modifiée par des serveurs intermédiaires.

En notation abrégée, l'agrégat de notification s'écrit :

```
{Notification}  =   <Expéditeur>   +   <Emetteur>   +
{<Destinataire>} + <KI> + (<Sujet>) + (<Signature>),
```

où l'opérateur '+' désigne la concaténation d'éléments et les éléments entre parenthèses sont optionnels.

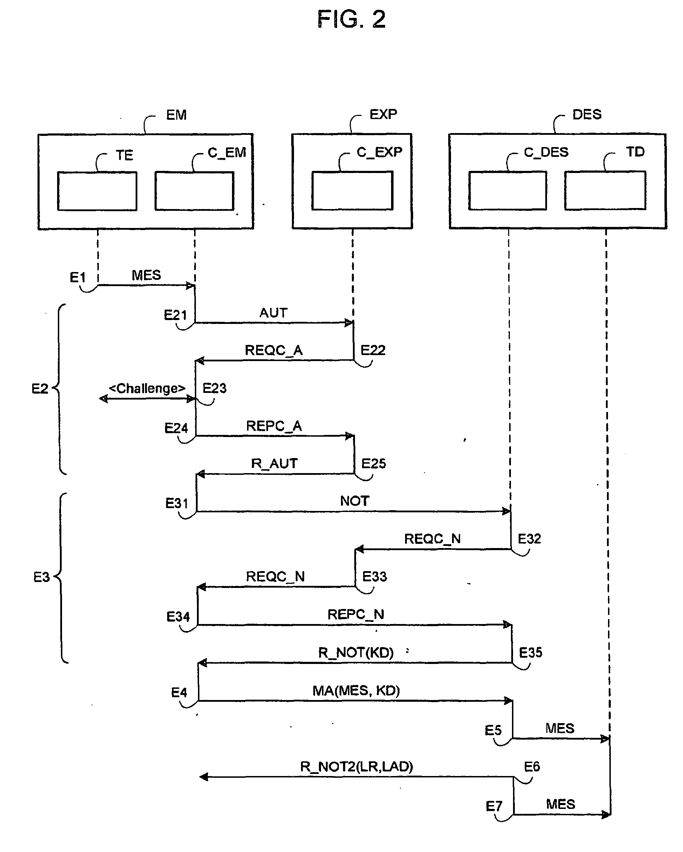

En référence à la figure 2, le procédé de contrôle de message selon l'invention comprend des étapes E1 à E7 exécutées dans le système de télécommunications.

On suppose que les domaines d'émetteur EM et d'expéditeur EXP ne sont pas confondus.

A l'étape initiale E1, un expéditeur souhaite envoyer un message MES à un ou plusieurs destinataires via le terminal d'expéditeur TE. Après la validation du message par l'expéditeur, le contrôleur de message d'émetteur C_EM intercepte le message à envoyer par le terminal d'expéditeur aux destinataires. Le message MES est par exemple un courrier électronique ou l'établissement d'un appel téléphonique sur internet.

Le message MES est mémorisé temporairement dans le contrôleur de message d'émetteur C_EM avant d'être éventuellement transmis à un ou plusieurs destinataires via le domaine de destinataire.

Avant toute communication entre le domaine d'émetteur EM et le domaine de destinataire DES, le contrôleur de message d'émetteur C_EM vérifie si l'expéditeur est légitime dans une phase d'authentification à des étapes E21 à E25 composant l'étape E2. En particulier, le contrôleur C_EM vérifie si l'identité de l'expéditeur est définie et attribuée dans le domaine d'expéditeur et si l'expéditeur dispose des droits nécessaires pour revendiquer cette identité.

A l'étape E21, le contrôleur de message d'émetteur C_EM génère une requête d'authentification AUT à transmettre au contrôleur de message d'expéditeur C_EXP.

Le contrôleur de message d'émetteur C_EM extrait des informations contenues dans le message MES reçu du terminal d'expéditeur TE pour générer un agrégat de notification {Notification} qui contient en particulier les éléments <Expéditeur>, <Emetteur>, {<Destinataire>} et <KI>, et qui est ensuite inséré dans une requête d'authentification AUT. Par exemple le contrôleur C_EM informe l'expéditeur que le message MES va subir une phase d'authentification distante du fait que les domaines d'émetteur et d'expéditeur sont différents.

Puis le contrôleur de message d'émetteur C_EM transmet la requête d'authentification AUT à l'adresse de transport d'un serveur de bordure en réception SBE_EXP dans le domaine d'expéditeur, ou vers l'adresse de transport du contrôleur de message C_EXP si celle-ci est déterminée. Par exemple, l'adresse de transport à laquelle est transmise la requête d'authentification est déterminée en consultant des tables de traduction préconfigurées ou au moyen de requêtes de résolution de nom de domaine DNS ("Domain Name Server" en anglais), après extraction du nom de domaine contenu dans l'élément <Expéditeur>.

En parallèle à la transmission de la requête d'authentification AUT, les informations relatives à l'authentification, notamment l'agrégat de notification {Notification}, sont mémorisées dans la base de données B_EM gérée par le contrôleur de message d'émetteur C_EM.

A l'étape E22, le contrôler de message d'expéditeur C_EXP reçoit la requête d'authentification AUT et en extrait l'agrégat de notification {Notification}, en particulier les éléments <Expéditeur>, <Emetteur> et la clé initiale contenue dans l'élément <KI>.

Optionnellement, le contrôleur de message d'expéditeur C_EXP vérifie si l'adresse de transport source de la requête d'authentification AUT fait partie des adresses attribuées au domaine d'émetteur.

Le contrôleur de message d'expéditeur C_EXP exécute l'une des trois politiques d'authentification suivantes dont le choix dépend éventuellement du contenu des éléments <Emetteur> ou <Expéditeur>.

Selon une première politique d'authentification appelée "totale", le contrôleur de message d'expéditeur C_EXP génère un agrégat de confirmation d'authentification {Conf_Authentification} contenant l'agrégat de notification {Notification}, un agrégat d'authentification {Authentification} et optionnellement un élément <MAC_AUT>. L'agrégat {Notification} peut être réduit à une forme la plus compacte possible en ne conservant par exemple que les éléments <Emetteur>, <Expéditeur> et <KI>. L'agrégat {Authentification} contient un agrégat {Challenge} et optionnellement les éléments <Heure>, <KE> et <Origine>.

L'élément <Heure> est un marqueur temporel de l'authentification incluant optionnellement une heure limite de validité. L'élément <KE> est un jeton généré aléatoirement à chaque authentification pour identifier de manière unique l'agrégat de confirmation d'authentification. L'élément <Origine> contient l'adresse de transport d'où a été reçue la requête d'authentification AUT. L'agrégat {Challenge} contient un ensemble de données appelé "challenge" que le domaine d'émetteur doit échanger avec le terminal d'expéditeur afin d'authentifier l'identité de l'expéditeur. Par exemple, le challenge transmis contient un élément aléatoire que le terminal d'expéditeur TE doit chiffrer avec un mot de passe attribué à l'expéditeur et retransmettre au contrôleur C_EXP. L'élément aléatoire chiffré doit correspondre à un résultat attendu par le contrôleur C_EXP pour que le challenge soit acceptable. L'élément <MAC_AUT> est un code d'authentification calculé par le contrôleur C_EXP sur la concaténation des agrégats {Notification} et {Authentification}, en utilisant par exemple une clé secrète ou privée qui est renouvelée périodiquement.

En notation abrégée, l'agrégat de confirmation d'authentification s'écrit :

```
{Conf_Authentification}  =  {Notification}  +
{Authentification} + (<MAC_AUT>),
```

avec :

```
{Authentification} = {Challenge} + (<Heure>) + (<KE>)
+ (<Origine>),
```

et

```
<MAC_AUT> = MAC ({Notification} + {Authentification})
```

où MAC est une fonction de calcul de code d'authentification utilisant une clé secrète ou privée, l'opérateur '+' désigne la concaténation d'éléments et les éléments entre parenthèses sont optionnels.

Puis le contrôleur de message d'expéditeur C_EXP génère et transmet une requête de confirmation d'authentification REQC_A contenant l'agrégat de confirmation d'authentification à destination de l'adresse de transport d'où a été reçue la requête AUT.

Selon une deuxième politique d'authentification appelée "partielle", le contrôleur de message d'expéditeur C_EXP transmet une requête de confirmation d'authentification REQC_A identique à celle générée selon la politique d'authentification "totale", à la différence que la requête ne contient pas l'agrégat {Challenge}. Avantageusement, la politique d'authentification "partielle" permet de vérifier la validité de l'adresse de transport d'où provient la requête d'authentification AUT, tout en consommant moins de ressources dans le domaine d'expéditeur que la politique d'authentification "totale".

Selon une troisième politique d'authentification appelée "directe", le contrôleur de message d'expéditeur C_EXP ne génère pas de requête de confirmation d'authentification REQC_A et le procédé passe directement à l'étape E25 décrite ci-après, pour une validation de l'identité de l'expéditeur contenue dans l'élément <Expéditeur>. Selon cette politique d'authentification "directe", la consommation de ressources dans le domaine d'expéditeur est limitée puisqu'elle ne nécessite aucune mémorisation ni calcul de code MAC par le contrôleur de message d'expéditeur C_EXP.

En parallèle à la génération de la requête REQC_A et en fonction des ressources de traitement et de mémoire dont dispose le contrôleur C_EXP, ce dernier adopte l'une des trois politiques locales de mémorisation suivantes.

Selon la première politique de mémorisation appelée "minimale", le contrôleur C_EXP ne mémorise aucun élément de la requête REQC_A dans la base de données B_EXP et calcule le code d'authentification <MAC_AUT> qui garantit l'intégrité des éléments d'informations sur lesquels il porte et qui est inséré dans la requête REQC_A. Cette politique "minimale" ne consomme aucune ressource de mémoire, mais nécessite des ressources de traitement supplémentaires pour la transmission de la requête REQC_A et la vérification d'une réponse à la requête REQC_A.

Selon la deuxième politique de mémorisation appelée "moyenne", le contrôleur C_EXP mémorise une information minimale associée au contenu de la requête REQC_A qui sert ensuite de clé de recherche lors de la réception d'une réponse à la requête REQC_A. Par exemple la clé de recherche pour la requête REQC_A est l'élément <KE> ou l'élément <KI> en l'absence d'élément <KE>. Le contrôleur de message d'expéditeur C_EXP mémorise la clé de recherche dans la base de données B_EXP, calcule et insère le code <MAC_AUT> dans la requête REQC_A. Cette politique consomme des ressources de mémoire minimales tout en réduisant les ressources de traitement en réception dans le cas d'une attaque par inondation.

Selon la troisième politique de mémorisation appelée "maximale", le contrôleur C_EXP mémorise l'agrégat (Conf_Authentification) sans calculer ni insérer le code d'authentification <MAC_AUT> dans la requête REQC_A. Cette politique requiert peu de ressources de traitement puisqu'elle ne réalise aucun calcul du code <MAC_AUT>, par contre elle est fortement consommatrice de ressources de mémoire ce qui la rend vulnérable à des attaques par inondation.

A l'étape E23, le contrôleur de message d'émetteur C_EM reçoit la requête de confirmation d'authentification REQC_A et en extrait l'agrégat de confirmation d'authentification, en particulier la clé initiale contenue dans l'élément <KI>. Si cette clé initiale correspond à une clé initiale déjà mémorisée dans la base de données B_EM du contrôleur C_EM, alors le traitement de la requête REQC_A se poursuit. Dans le cas contraire, la requête REQC_A n'est pas traitée et le procédé se termine.

Si l'agrégat de confirmation d'authentification ne contient pas d'agrégat {Challenge}, dans le cas d'une politique d'authentification "partielle" adoptée à l'étape E22, le contrôleur de message d'émetteur C_EM exécute directement l'étape E24.

Si l'agrégat de confirmation d'authentification {Conf_Authentification} contient un agrégat {Challenge} transmis par le domaine d'expéditeur, le contrôleur C_EM fournit l'ensemble des données contenu dans l'agrégat {Challenge}, c'est-à-dire le challenge, au terminal d'expéditeur TE tel qu'identifié par l'élément <Expéditeur> de l'agrégat {Notification} correspondant à l'élément <KI>. Le terminal d'expéditeur TE doit alors retourner une réponse au contrôleur C_EM. Si aucune réponse au challenge n'est reçue de la part du terminal expéditeur dans un délai borné, alors l'étape E23 est considérée échouée et le procédé se termine, dans le cas contraire l'étape E24 est exécutée.

A l'étape E24, le contrôleur C_EM génère une réponse de confirmation d'authentification REPC_A et la transmet vers l'adresse de transport d'où a été reçue la requête de confirmation d'authentification REQC_A ou alternativement vers l'adresse de transport à laquelle a été envoyée la requête d'authentification AUT.

La réponse de confirmation d'authentification REPC_A comprend l'agrégat de confirmation d'authentification {Conf_Authentification} tel qu'extrait de la requête de confirmation d'authentification REPC_A, et le cas échéant un élément <Réponse-Challenge> contenant la réponse au challenge retournée par le terminal d'expéditeur, qui est par exemple une donnée chiffrée.

A l'étape E25, le contrôleur de message d'expéditeur C_EXP reçoit la réponse de confirmation d'authentification REPC_A et en extrait l'agrégat de confirmation d'authentification et l'élément <Réponse-Challenge> si ce dernier est présent.

Optionnellement, le contrôleur C_EXP vérifie la validité temporelle de la réponse, sur la base de l'élément <Heure>. Le même élément <Heure> peut être utilisé par le contrôleur C_EXP pour retrouver la clé secrète ou privée qu'il avait utilisée le cas échéant pour le calcul du code d'authentification <MAC_AUT> dans la requête de confirmation d'authentification REQC_A.

Optionnellement le contrôleur C_EXP vérifie que l'adresse de transport d'où a été reçue la réponse de confirmation d'authentification REPC_A est identique à celle contenue dans l'élément <Origine> de l'agrégat {Authentification} si cet élément est présent.

Puis le contrôleur C_EXP vérifie la validité de la réponse REPC_A selon la politique de mémorisation locale adoptée préalablement à l'étape E22 pour la transmission de la requête REQC_A. Selon la politique de mémorisation "maximale", l'agrégat {Conf_Authentification} ne contient pas d'élément <MAC_AUT> et la vérification porte sur les contenus des agrégats {Notification} et {Authentification} qui doivent être strictement égaux à ceux des agrégats {Notification} et {Authentification} respectivement, préalablement mémorisés par le module CMP_EXP à l'étape E22. Si la vérification est un succès, la réponse REPC_A est considérée valide et le procédé se poursuit. Si la vérification est un échec, la réponse REPC_A est ignorée et le procédé se termine.

Selon la politique de mémorisation "moyenne", le contrôleur C_EXP vérifie en premier lieu si la clé de recherche contenue dans la réponse REPC_A, par exemple <KI> ou <KE>, correspond à une clé de recherche préalablement mémorisée par le contrôleur C_EXP dans la base B_EXP. Si la vérification est un succès, le contrôleur C_EXP procède à la vérification du code d'authentification contenu dans l'élément <MAC_AUT> comme indiqué ci-après en référence à la politique de mémorisation "minimale". Si la vérification est un échec, la réponse REPC_A est ignorée et le procédé se termine.

Selon la politique de mémorisation "minimale", la vérification est basée uniquement sur un calcul de code d'authentification puisqu'aucun élément d'information n'a été mémorisé par le contrôleur C_EXP lors de la génération de la requête REQC_A à l'étape E22. Le contrôleur C_EXP calcule un code de vérification d'authentification sur les agrégats {Notification} et {Authentification} contenus dans la réponse de confirmation d'authentification REPC_A en utilisant la clé secrète ou privée adéquate. Si le code de vérification d'authentification est égal au code d'authentification <MAC_AUT> contenu dans la réponse de confirmation d'authentification REPC_A, alors cette dernière est considérée comme valide. Dans le cas contraire, ou en l'absence de code d'authentification <MAC_AUT>, la réponse de confirmation d'authentification REPC_A est invalide et le traitement de l'étape E25 se termine.

Si la réponse de confirmation d'authentification REPC_A est valide selon l'une des trois politiques de mémorisation précédentes, le contrôleur C_EXP vérifie que l'identité de l'expéditeur contenue dans l'élément <Expéditeur> de l'agrégat {Notification} est authentique relativement au domaine d'expéditeur. En référence à la politique d'authentification préalablement exécutée lors de la génération de la requête REQC_A, si la politique d'authentification est "partielle" ou "directe", cette vérification est relative seulement à la condition a) énoncée ci-après, et si la politique locale d'authentification est "totale", la vérification est relative aux conditions a) et b) énoncées ci-après :

a) l'élément <Expéditeur> contient une identité autorisée, c'est-à-dire attribuée, dans le domaine expéditeur ;
b) la réponse contenue dans l'élément <Réponse-Challenge> certifie que le terminal d'expéditeur dispose bien des droits nécessaires pour revendiquer l'identité autorisée. Une absence d'élément <Réponse-Challenge> dans le cas d'une politique d'authentification "totale" est assimilée à un élément <Réponse-Challenge> erroné.

Puis une interface de communication du contrôleur C_EXP transmet une réponse d'authentification R_AUT contenant un agrégat de données {Rep_Authentification} propre au domaine d'expéditeur à destination de l'adresse de transport d'où a été reçue la réponse REPC_A ou alternativement à destination de l'adresse de transport désignée par le champ <Origine> de l'agrégat {Authentification} si ce dernier est présent.

Si l'identité de l'expéditeur est authentifiée, l'agrégat {Rep_Authentification} comprend l'agrégat {Notification} tel que reçu dans la réponse REPC_A, un agrégat {Accord_Expéditeur} et optionnellement un élément <MAC_R_AUT>. L'agrégat {Accord_Expéditeur} comprend un avis d'acceptation et des éléments d'information <KA>, <Origine> et optionnellement <Heure> qui sont respectivement équivalents aux éléments <KE>, <Origine> et <Heure> contenus dans la requête REQC_A générée à l'étape E22. L'élément <MAC_R_AUT> est un code d'authentification calculé par le contrôleur C_EXP sur la concaténation des agrégats {Notification} et {Accord_Expéditeur}, en utilisant par exemple une clé secrète ou privée qui est renouvelée périodiquement. Le choix d'insérer l'élément <MAC_R_AUT> dans la réponse R_AUT est basé, comme pour l'insertion du code <MAC_AUT> dans la requête REQC_A à l'étape E22, sur la politique locale de mémorisation.

Si l'identité de l'expéditeur n'est pas authentifiée, l'agrégat {Rep_Authentification} est composé de l'agrégat {Notification} tel que reçu du message REPC_A et d'un agrégat {Refus_Expéditeur} qui contient un avis de refus accompagnée optionnellement de la cause du refus.

Durant la phase d'authentification, le domaine d'expéditeur est alerté d'un envoi ultérieur d'une requête de notification depuis le domaine d'émetteur vers le domaine de destinataire. En corollaire, le domaine d'émetteur attend du domaine d'expéditeur qu'il lui relaye une requête de confirmation de notification REQC_N reçue en retour de la requête de notification envoyée précédemment au domaine de destinataire.

Le domaine d'émetteur EM transmet ainsi au domaine de destinataire DES une requête de notification décrivant le message MES que l'expéditeur souhaite envoyer à un ou plusieurs destinataires afin que chaque destinataire accepte ou refuse le message MES, dans une phase de notification à des étapes E31 à E35 composant l'étape E3.

A l'étape E31, le contrôleur de message d'émetteur C_EM reçoit la réponse d'authentification R_AUT dont il vérifie grâce à la clé <KI> contenue dans l'agrégat {Notification} qu'elle correspond bien à une requête précédemment émise par le contrôleur C_EM.

Si la réponse d'authentification R_AUT contient un avis de refus, alors l'authentification du terminal d'expéditeur a échoué et la phase de notification n'est pas réalisée, mettant fin au procédé.

Si la réponse d'authentification R_AUT contient un avis d'acceptation, alors l'authentification de l'expéditeur du terminal d'expéditeur a réussi et la phase de notification est engagée. Le contrôleur de message d'émetteur C_EM génère une requête de notification NOT contenant les agrégats {Notification} et {Rep_Authentification}. L'agrégat {Rep_Authentification} est directement extrait de la réponse R_AUT alors que l'agrégat {Notification} est similaire à celui envoyé par le contrôleur C_EM dans la requête AUT à l'étape E21 et comporte en particulier la clé initiale contenue dans l'élément <KI>. L'agrégat {Rep_Authentification} contient lui-même un agrégat {Notification} qui consiste généralement en une forme réduite de l'agrégat {Notification} généré à l'étape E21. La requête de notification NOT est transmise par une interface de communication du contrôleur de message d'émetteur C_EM au contrôleur de message de destinataire C_DES ou au serveur de bordure en réception SBR_DES du domaine de destinataire DES.

En parallèle à la transmission de la requête de notification, des informations relatives à la requête de notification sont mémorisées dans la base de données B_EM gérée par le contrôleur C_EM.

A l'étape E32, le contrôleur de message de destinataire C_DES reçoit la requête de notification NOT et en extrait les agrégats {Notification} et {Rep_Authentification}.

Optionnellement, le contrôleur de message de destinataire C_DES vérifie si l'adresse de transport d'où a été reçue la requête de notification NOT fait partie des adresses attribuées au domaine d'émetteur EM en fonction de l'adresse contenue dans l'élément <Emetteur>.

Le contrôleur de message de destinataire C_DES analyse l'adresse logique contenue dans l'élément <Expéditeur> pour déterminer l'adresse de transport du serveur de bordure SBR_EXP du domaine d'expéditeur EXP auquel est couplé le contrôleur de message d'expéditeur C_EXP. Ladite adresse de transport est déterminée en consultant des tables de traduction préconfigurées ou au moyen de requêtes de résolution de nom de domaine DNS. Optionnellement l'adresse de transport est déterminée avant le traitement de la requête de notification NOT afin d'économiser des ressources en traitement dans le cas où la détermination de l'adresse échouerait.

Le contrôleur de message de destinataire C_DES génère ensuite un agrégat de confirmation de notification {Conf_Notification} contenant les agrégats {Rep_Authentification}, {Notification}, un agrégat {Notification_ACK}, et optionnellement un élément <MAC_NOT>. Les agrégats {Rep_Authentification} et {Notification} sont identiques à ceux extraits de la requête NOT, et contiennent donc la clé initiale de l'élément <KI>. L'agrégat {Notification_ACK} contient l'élément <Origine> et un élément <KP>, et optionnellement l'élément <Heure>. L'élément <KP> est un jeton généré aléatoirement à chaque requête de confirmation de notification pour identifier de manière unique l'agrégat de confirmation de notification. L'élément <Origine> indique l'adresse de transport d'où a été reçue la requête de notification NOT.

L'élément <MAC_NOT> contient un code d'authentification qui est calculé sur les agrégats {Notification} et {Notification_ACK} à partir d'une clé secrète ou privée propre au contrôleur C_DES. Le calcul du code <MAC_NOT> et son insertion dans l'agrégat {Conf_Notification} dépendent de la politique locale de mémorisation adoptée et décrite à l'étape E22.

En notation abrégée, l'agrégat de confirmation de notification s'écrit :

```
{Conf_Notification}  =  {Rep_Authentification}  +
{Notification} + {Notification_ACK} + (<MAC_NOT>),
```

avec :

```
{Notification_ACK } = <KP> + (<Heure>) + (<Origine>),
```

et

```
<MAC_NOT> = MAC ({Notification} + {Notification_ACK})
```

où MAC est une fonction de calcul de code d'authentification utilisant une clé secrète ou privée, l'opérateur '+' désigne la concaténation d'éléments et les éléments entre parenthèses sont optionnels.

Puis le contrôleur de message de destinataire C_DES transmet une requête de confirmation de notification REQC_N contenant l'agrégat de confirmation de notification {Conf_Notification}, et par conséquent la clé initiale de l'élément <KI>, à destination de l'adresse de transport déterminée à partir de l'adresse logique contenue dans l'élément <Expéditeur>, c'est-à-dire au serveur de bordure en réception SBR_EXP du domaine d'expéditeur ou au contrôleur de message d'expéditeur C_EXP.

Ainsi, pour une politique locale de mémorisation "minimale" ou "moyenne", le traitement de la requête de notification n'impose aucune mémorisation, ou une mémorisation limitée respectivement, de message d'expéditeur dans le domaine de destinataire qui pourrait rendre vulnérable le domaine de destinataire à des attaques de type déni de service.

A l'étape E33, le contrôleur de message d'expéditeur C_EXP reçoit la requête de confirmation de notification REQC_N et en extrait l'agrégat de confirmation de notification {Conf_Notification} contenant l'agrégat {Rep_Authentification} qui est censé avoir été généré par le domaine d'expéditeur, et en particulier la clé initiale contenue dans l'élément <KI>.

Afin de vérifier que l'agrégat {Rep_Authentification} a bien été généré par le domaine d'expéditeur, le contrôleur de message d'expéditeur C_EXP vérifie la validité de la requête REQC_N de manière similaire à l'étape E25 et selon la politique de mémorisation locale adoptée préalablement à l'étape E22.

Selon la politique de mémorisation "maximale", l'agrégat {Rep_Authentification} ne contient pas d'élément <MAC_R_AUT> et la vérification porte sur les contenus des agrégats {Notification} et {Accord_Expéditeur} qui doivent être strictement égaux à ceux des agrégats {Notification} et {Accord_Expéditeur} respectivement, préalablement mémorisés à l'étape E25 par le module CMP_EXP.

Selon la politique de mémorisation "moyenne", le contrôleur C_EXP vérifie en premier lieu si la clé de recherche contenue dans la requête REQC_N, par exemple <KI> ou <KA>, correspond à une clé de recherche préalablement mémorisée par le contrôleur C_EXP dans la base B_EXP. Si la vérification est un succès, le contrôleur C_EXP procède à la vérification du code d'authentification contenu dans l'élément <MAC_R_AUT> comme indiqué ci-après en référence à la politique de mémorisation "minimale".

Selon la politique de mémorisation "minimale", la vérification est basée uniquement sur le code d'authentification contenu dans l'élément <MAC_R_AUT> puisqu'aucun élément d'information n'a été mémorisé par le contrôleur C_EXP lors de la génération de la requête R_AUT à l'étape E25. L'élément <MAC_R_AUT> est un code d'authentification calculé sur le contenu de l'agrégat {Rep_Authentification} qui est censé avoir été généré précédemment par le domaine d'expéditeur à l'étape E25. Pour que la requête REQC_N soit valide, un code de vérification d'authentification sur le contenu de l'agrégat {Rep_Authentification} calculé par le contrôleur C_EXP doit être égal au code d'authentification <MAC_R_AUT> contenu dans la requête REQC_N. En particulier, l'égalité des codes <MAC_R_AUT> et de vérification est vérifiée lorsque l'agrégat {Rep_Authentification} de la requête REQC_N est identique à celui généré par le contrôleur C_EXP à l'étape E25.

Si la vérification est un succès, c'est-à-dire dans tous les cas si la clé initiale contenue dans la requête de confirmation de notification est identique à la clé initiale déjà mémorisée dans le domaine expéditeur suite à la phase d'authentification, la requête REQC_N est considéré valide et le contrôleur C_EXP analyse l'agrégat {Rep_Authentification} pour en extraire l'élément <Origine> mémorisé à l'étape E25. Une interface de communication du contrôleur de message d'expéditeur C_EXP retransmet alors la requête de confirmation de notification REQC_N à l'adresse de transport désignée par l'élément <Origine>, après avoir optionnellement supprimé l'agrégat {Rep_Authentification} de la requête REQC_N.

Si la vérification est un échec, alors l'expéditeur désigné par l'agrégat {Notification} n'a pas été préalablement authentifié par le contrôleur C_EXP et la requête REQC_N est susceptible d'être corrompue. Dans ce cas, la requête REQC_N n'est pas traitée et le procédé se termine.

Dès que la requête REQC_N a été retransmise par le contrôleur C_EXP, celui-ci peut supprimer de la base de données B_EXP tout enregistrement éventuel de l'agrégat de notification correspondant à la requête REQC_N, le contrôleur C_EXP n'intervenant plus dans les étapes suivantes du procédé.

Par ailleurs, tout enregistrement éventuel effectué suite à une phase d'authentification lors des étapes E22 ou E25 peut être supprimé après un délai prédéterminé afin de ne pas exposer le contrôleur C_EXP à d'éventuelles attaques de type déni de service.

A l'étape E34, le contrôleur de message d'émetteur C_EM reçoit la requête de confirmation de notification REQC_N et en extrait l'agrégat de confirmation de notification {Conf_Notification}, en particulier l'agrégat {Notification} qu'il contient. Le contrôleur C_EM vérifie que l'agrégat {Notification} reçu dans la requête REQC_N correspond effectivement à une requête de notification générée préalablement par le domaine d'émetteur, par exemple en vérifiant.que la clé <KI> extraite de l'agrégat {Notification} correspond à une clé déjà mémorisée dans la base de données B_EM.

Si l'agrégat {Notification} reçu est identique à une notification déjà mémorisée dans la base de données B_EM, une interface de communication du contrôleur de message d'émetteur C_EM transmet une réponse de confirmation de notification REPC_N contenant l'agrégat de confirmation de notification {Conf_Notification} tel qu'extrait de la requête REQC_N, après avoir supprimé l'agrégat {Réponse_Authentification} le cas échéant, à destination de l'adresse de transport vers laquelle a été envoyée la requête de notification NOT, c'est-à-dire à destination du contrôleur C_DES.

Par contre, si l'agrégat {Notification} reçu n'est identique à aucune notification déjà mémorisée dans la base de données B_EM du contrôleur C_EM, la requête REQC_N n'est pas traitée et le procédé se termine.

Par ailleurs, si après un délai prédéterminé succédant à l'étape E31, aucune requête de confirmation de notification REQC_N n'est reçue par le contrôleur C_EM en réponse à une requête de notification préalable NOT transmise par le contrôleur C_EM, le domaine d'émetteur relance une phase de notification en transmettant à nouveau une requête de notification au contrôleur C_DES, en considérant que la phase de notification précédente a échoué.

A l'étape E35, le contrôleur de message de destinataire C_DES reçoit la réponse de confirmation de notification REPC_N et en extrait l'agrégat de confirmation de notification {Conf_Notification}.

Optionnellement, le contrôleur C_DES vérifie la validité temporelle de la réponse, sur la base de l'élément <Heure>. Le même élément <Heure> peut être utilisé par le contrôleur C_DES pour retrouver la clé secrète ou privée qu'il avait utilisée pour le calcul du code de notification <MAC_NOT> dans la requête de confirmation de notification REQC_N. Cette vérification n'est utile seulement si le contrôleur C_DES utilise des clés secrètes ou privées renouvelées périodiquement.

Puis le contrôleur C_DES vérifie la validité de la réponse REPC_N de manière similaire à l'étape E25 ou E33 et selon la politique de mémorisation locale adoptée préalablement à l'étape E32 en fonction des éléments {Notification}, {Notification_ACK} et l'élément <MAC_NOT> le cas échéant.

Si la vérification est un succès, alors la réponse de confirmation de notification REPC_N est considérée comme valide. Dans le cas contraire, la réponse de confirmation de notification REPC_N est invalide et les étapes suivantes ne sont pas exécutées par le contrôleur C_DES du domaine de destinataire, mettant fin au procédé.

Si la réponse de confirmation de notification REPC_N est valide, le contrôleur C_DES consulte des listes d'adresses d'expéditeur dans la base de données B_DES, notamment la liste blanche d'adresses autorisées au sein du domaine de destinataire LBDD, la liste blanche d'adresses autorisées au sein d'un sous-domaine du domaine de destinataire LBSD et la liste blanche d'adresses autorisées par un utilisateur particulier LBU. Le contrôleur C_DES peut consulter également les listes noires d'adresses interdites LNDD, LNSD et LNU. La consultation des listes dans la base de données B_DES indique au contrôleur C_DES si l'adresse de l'expéditeur est autorisée, pour au moins un destinataire, afin d'accepter la réception du message MES en provenance de cette adresse.

A partir de la liste de destinataires {<Destinataire>} extraite de l'agrégat {Notification}, le contrôleur C_DES génère alors une liste de refus LR, une liste d'accord définitif LAD et une liste d'accord provisoire LAP en fonction des listes consultées.

La liste de refus LR inclut les identificateurs des destinataires pour lesquels la réception du message MES est refusée, soit parce que ces destinataires n'existent pas dans le domaine de destinataire, soit parce que l'adresse de l'expéditeur apparaît au moins dans une des listes LNDD, LNSD ou dans l'une des listes LNU relatives à ces destinataires.

La liste d'accord définitif LAD inclut les identificateurs des destinataires pour lesquels la réception du message MES est accordée définitivement. La condition pour qu'un destinataire soit ajouté à cette liste est que l'adresse de l'expéditeur n'apparaisse dans aucune des listes LNDD ou LNSD ou dans la liste LNU relative à ce destinataire, et qu'à l'inverse l'adresse de l'expéditeur apparaisse dans les listes LBDD ou LBSD ou dans la liste LBU relative à ce destinataire.

La liste d'accord provisoire LAP inclut les identificateurs des destinataires pour lesquels la réception du message MES est accordée provisoirement, c'est-à-dire ni refusée, ni acceptée a priori, par opposition aux destinataires qui sont identifiés respectivement dans les listes LR et LAD.

Au final, le cardinal de la liste {<Destinataire>} est égal à la somme des cardinaux des listes LR, LAD et LAP dont au moins l'une des trois est non vide.

En variante, le contrôleur C_DES génère la liste LR, respectivement LAD, sans recourir aux listes LNDD ou LNSD ou LNU, respectivement LBDD ou LBSD ou LBU, par exemple en recueillant des refus, respectivement des accords, explicites des destinataires identifiés dans la notification. Dans tous les cas la liste LAP contient les identificateurs des destinataires n'entrant ni dans la liste LR ni dans la liste LAD.

Si au moins l'une des listes LAP ou LAD est non vide, le contrôleur C_DES mémorise l'agrégat de notification {Notification} tel qu'extrait de la réponse REPC_N et optionnellement les listes générées LR, LAP, LAD associées. Le contrôleur C_DES produit ensuite une réponse de notification R_NOT contenant l'agrégat de notification {Notification} tel qu'extrait de la réponse REPC_N et réduit à sa forme la plus compacte possible, et les listes générées LR, LAD et LAP. La réponse de notification R_NOT est transmise à l'adresse de transport d'où provient la réponse REPC_N ou alternativement à l'adresse de transport désignée par l'élément <Origine> de l'agrégat {Notification ACK}, c'est à dire l'adresse d'où a été reçue la requête de notification NOT.

Si la liste d'accord définitif LAD n'est pas vide et inclut au moins un identificateur de destinataire, c'est-à-dire si au moins un destinataire a déjà fourni son accord pour recevoir le message MES explicitement ou implicitement au moyen d'une liste LBDD, LBSD ou LBU, la réponse de notification R_NOT contient en outre une clé définitive KD.

A l'étape E4, le contrôleur de message d'émetteur C_EM reçoit la réponse de notification R_NOT et en extrait les listes LR, LAD et LAP. Le contrôleur C_EM présente les listes LR, LAD et LAP à l'expéditeur du message MES qui est ainsi informé des destinataires qui ont refusé la requête de notification, ceux qui l'ont acceptée et ceux pour qui une demande d'accord explicite est nécessaire.

Si la liste d'accord définitif LAD n'est pas vide, le contrôleur C_EM extrait de la réponse de notification R_NOT la clé définitive KD correspondante et produit un message authentifié MA contenant le message initial MES reçu à l'étape E1 et la clé définitive KD. Le message authentifié MA est transmis vers la même adresse de transport que celle d'où a été reçu la réponse R_NOT ou alternativement vers l'adresse à laquelle a été transmise la requête de notification NOT ou la réponse de confirmation de notification REPC_N.

A l'étape E5, le contrôleur de message de destinataire C_DES reçoit le message authentifié MA qui contient le message MES et la clé définitive KD et vérifie la validité de cette dernière par rapport à une notification préalablement enregistrée à l'étape E35. Si la clé définitive KD est valide, le contrôleur de message de destinataire C_DES récupère l'agrégat de notification {Notification} correspondant, tel que mémorisé par le contrôleur C_DES à l'étape E35. Par ailleurs, le contrôleur C_DES peut contrôler également l'intégrité du message MES reçu à l'aide de la signature du message fournie par l'élément <Signature> si ce dernier est présent dans le même agrégat de notification.

Puis le contrôleur C_DES transmet le message MES aux destinataires dont les identificateurs sont inclus dans la liste d'accord définitif LAD, telle que mémorisée par le contrôleur C_DES à l'étape E35 avant la transmission de la réponse de notification R_NOT, afin d'éviter qu'un émetteur malveillant ne modifie la liste des destinataires entre la transmission de la requête de notification NOT et la transmission du message authentifié MA. Le contrôleur C_DES transmet le message MES aux terminaux des destinataires TD ou aux adresses des destinataires.

Si la clé définitive KD n'est pas valide, le message MES n'est pas transmis aux destinataires, le message ayant pu être altéré par un tiers malveillant, et le procédé se termine.

En revenant à l'étape E35, si la liste d'accord provisoire LAP inclut au moins l'identificateur d'un destinataire, le destinataire doit donner son accord ou son refus explicite pour recevoir le message MES décrit dans la requête de notification NOT.

A cette fin, le contrôleur de message de destinataire C_DES présente au terminal du destinataire des informations issues de l'agrégat {Notification} relatives à l'expéditeur du message MES, telles que l'adresse ou l'identificateur de l'expéditeur, à l'étape E6. Puis, à la demande du contrôleur de message de destinataire C_DES, le destinataire fournit explicitement au contrôleur C_DES son accord ou son refus pour recevoir le message MES. Le contrôleur C_DES actualise alors le contenu de la liste LAD ou LR en fonction de l'accord ou du refus explicite fourni par le destinataire.

Par ailleurs, le contrôleur C_DES peut également actualiser la liste noire LNU et la liste blanche LBU relatives au destinataire. Avantageusement, le contrôleur C_DES peut parcourir régulièrement les listes noire et blanche de chaque destinataire pour actualiser les listes blanches LBDD et LBSD et noires LNDD et LNSD relatives au domaine de destinataire.

Lorsque tous les accords et/ou refus ont été recueillis par le contrôleur C_DES pour l'ensemble des destinataires contenus dans la liste LAP, ce dernier génère une deuxième réponse de notification R_NOT2 contenant les listes actualisées LR et LAD et la transmet au contrôleur C_EM afin que ce dernier indique à l'expéditeur les destinataires complémentaires ayant accepté et/ou refusé le message MES.

Puis à l'étape E7, le contrôleur de message de destinataire C_DES transmet le message MES aux terminaux de destinataires TD ou aux adresses des destinataires qui ont donné explicitement leur accord.

Si la liste d'accord provisoire LAP générée par le contrôleur C_DES à l'étape E35 est vide, les étapes E6 et E7 ne sont pas exécutées.

En variante, puisque la fourniture de l'accord ou du refus pour recevoir le message MES par chaque destinataire de la liste LAP peut être retardée par exemple par l'absence d'au moins un destinataire, l'étape E6 peut être exécutée en plusieurs fois, selon le nombre de destinataires rattachés à la liste LAP. Dans ce cas, l'étape E7 est répétée plusieurs fois afin que le contrôleur C_DES transmette le message MES seulement aux terminaux de destinataires TE qui ont donné explicitement leur accord, même si d'autres destinataires n'ont pas encore donné leur accord.

Dans une variante, le contrôleur C_DES transmet la deuxième réponse de notification R_NOT2 contenant les listes actualisées LR et LAD au contrôleur C_EM après avoir transmis le message MES aux terminaux de destinataires TD qui ont donné explicitement leur accord.

Dans une autre variante, si la liste d'accord provisoire LAP générée à l'étape E35 inclut au moins un identificateur d'un destinataire et si la liste d'accord définitif LAD est vide, la réponse de notification R_NOT transmise à l'étape E35 ne contient pas de clé définitive KD. Dans ce cas, les étapes E4 et E5, pendant lesquelles le message authentifié MA qui contient le message MES et la clé définitive KD est transmis depuis le contrôleur de message d'émetteur C_EM successivement au contrôleur de message de destinataire C_DES puis aux destinataires, sont exécutées après l'étape E6. Au cours de l'étape E6, le contrôleur C_DES transmet la deuxième réponse de notification R_NOT2 contenant les listes actualisées LR et LAD et une clé définitive KD au contrôleur C_EM, c'est-à-dire après qu'au moins un destinataire ait fourni son accord explicite pour recevoir le message MES. Par conséquent, le domaine d'émetteur transmet le message authentifié MA au domaine de destinataire après avoir reçu la deuxième réponse de notification R_NOT2 contenant la liste d'accord définitif actualisée incluant au moins un identificateur d'un destinataire.

Dans une autre variante, l'identité de l'expéditeur est gérée par le domaine d'émetteur EM et les domaines d'expéditeur EXP et d'émetteur EM sont confondus. Dans ce cas, l'étape E2 relative à la phase d'authentification ne comprend que l'étape E23, pendant laquelle le terminal d'expéditeur TE répond au challenge transmis optionnellement par le contrôleur de message d'émetteur C_EM afin que ce dernier authentifie l'expéditeur du message MES. Par ailleurs, les étapes E32 et E33 ne forment plus qu'une étape pendant laquelle le contrôleur de message de destinataire C_DES transmet la requête de confirmation de notification REQC_N directement vers le contrôleur de message d'émetteur C_EM et non plus vers le domaine d'expéditeur.

Dans une autre variante, le contrôleur de message d'émetteur C_EM est inclus dans le terminal d'expéditeur et n'exécute aucune des étapes du procédé selon l'invention de manière automatique. A chaque étape pendant laquelle intervient le contrôleur C_EM, ce dernier indique à l'expéditeur via le terminal d'expéditeur TE les instructions à suivre pour l'exécution de l'étape. Par exemple, les instructions sont affichées sur un écran du terminal d'expéditeur et l'expéditeur participe manuellement à la création des requêtes et réponses relatives aux phases d'authentification et de notification.

L'invention décrite ici concerne un procédé et deux entités incluses respectivement dans un domaine d'émetteur et dans un domaine d'expéditeur pour contrôler un message à transmettre par un terminal d'expéditeur connecté au domaine d'émetteur vers un domaine de destinataire via un réseau de télécommunications, l'expéditeur étant rattaché administrativement ou contractuellement au domaine d'expéditeur. Selon une implémentation, les étapes du procédé de l'invention sont déterminées par les instructions de programmes d'ordinateur incorporés respectivement dans lesdites entités selon l'invention. Les programmes comportent des instructions de programme qui, lorsque lesdits programmes sont exécutés respectivement dans lesdites entités dont le fonctionnement est alors commandé par l'exécution des programmes, réalisent les étapes du procédé selon l'invention.

En conséquence, l'invention s'applique également à un programme d'ordinateur, notamment un programme d'ordinateur enregistré sur ou dans un support d'informations lisible par un ordinateur et tout dispositif de traitements de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'informations peut être n'importe quelle entité ou dispositif capable de stocker le programme. Par exemple, le support peut comporter un moyen de stockage ou support d'enregistrement sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'informations peut être un circuit intégré dans lequel le programme est incorporé, le circuit étant adapté pour exécuter ou pour être utilisé dans l'exécution du procédé selon l'invention.

**Revendications**

1. Procédé pour contrôler un message (MES) à transmettre par un terminal d'expéditeur (TE) connecté à un domaine d'émetteur (EM) vers un domaine de destinataire (DES), l'expéditeur étant rattaché à un domaine d'expéditeur (EXP), **caractérisé en ce qu'**il comprend les étapes suivantes, suite à une authentification de l'expéditeur du message par le domaine d'expéditeur :

   transmettre (E25, E31) des données de domaine d'expéditeur depuis le domaine d'expéditeur au domaine d'émetteur et une requête de notification (NOT) contenant lesdites données depuis le domaine d'émetteur au domaine de destinataire,
   en réponse à la réception de la requête de notification, transmettre (E32) une requête de confirmation de notification (REQC_N) contenant lesdites données depuis le domaine de destinataire au domaine d'expéditeur,
   si les données contenues dans la requête de confirmation de notification sont identiques aux données transmises par le domaine d'expéditeur suite à l'authentification de l'expéditeur, retransmettre (E33) cette requête depuis le domaine d'expéditeur au domaine d'émetteur, et
   en réponse à la réception de la requête de confirmation de notification, transmettre (E34) depuis le domaine d'émetteur une réponse de confirmation de notification (REPC_N) au domaine de destinataire.

2. Procédé conforme à la revendication 1, selon lequel après réception de la réponse de confirmation de notification (REPC_N), le domaine de destinataire génère (E35) une liste de refus (LR), une liste d'accord définitif (LAD) et une liste d'accord provisoire (LAP) incluant des identificateurs des destinataires pour lesquels la réception du message est respectivement refusée, accordée définitivement et accordée provisoirement, et transmet (E35) une réponse de notification (R_NOT) contenant les listes au domaine d'émetteur.

3. Procédé conforme à la revendication 2, selon lequel si la liste d'accord définitif (LAD) inclut au moins un identificateur de destinataire, la réponse de notification (R_NOT) contient une clé définitive (KD) et après avoir reçu la réponse de notification, le domaine d'émetteur transmet (E4) un message authentifié (MA) contenant le message (MES) et la clé définitive (KD) au domaine de destinataire afin que ce dernier transmette (E5) le message à au moins un terminal d'un destinataire dont l'identificateur est inclus dans la liste d'accord définitif, après avoir validé la clé définitive contenue dans le message authentifié.

4. Procédé conforme à la revendication 2 ou 3, selon lequel si la liste d'accord provisoire (LAP) inclut au moins un identificateur d'un destinataire, à la demande du domaine de destinataire, le destinataire fournit un accord ou un refus pour recevoir le message (MES) au domaine de destinataire afin que ce dernier transmette le message vers le terminal du destinataire.

5. Procédé conforme à la revendication 4, selon lequel le domaine de destinataire actualise la liste de refus et la liste d'accord définitif en fonction de l'accord ou du refus fourni par le destinataire et transmet une deuxième réponse de notification (R_NOT2) contenant les listes actualisées au domaine d'émetteur.

6. Procédé conforme à la revendication 5, selon lequel si dans la réponse de notification (R_NOT) la liste d'accord provisoire (LAP) inclut au moins un identificateur d'un destinataire et la liste d'accord définitif (LAD) est vide, le domaine d'émetteur transmet le message au domaine de destinataire après avoir reçu la deuxième réponse de notification (R_NOT2) contenant la liste d'accord définitif actualisée incluant au moins un identificateur d'un destinataire.

7. Procédé conforme à l'une quelconque des revendications 1 à 6, selon lequel l'authentification (E2) de l'expéditeur du message comprend en outre une authentification de l'identité de l'expéditeur et une validation de droits nécessaires pour revendiquer l'identité par le domaine d'expéditeur, suite à un échange de données entre le domaine d'expéditeur et le terminal d'expéditeur.

8. Système pour contrôler un message (MES) à transmettre par un terminal d'expéditeur (TE) connecté à un domaine d'émetteur (EM) vers un domaine de destinataire (DES), l'expéditeur étant rattaché à un domaine d'expéditeur (EXP), **caractérisé en ce qu'**il comprend :

   - un moyen (C_EXP) dans le domaine d'expéditeur pour transmettre des données de domaine d'expéditeur au domaine d'émetteur, suite à une authentification de l'expéditeur du message par le domaine d'expéditeur,
   - un moyen (C_EM) dans le domaine d'émetteur pour transmettre une requête de notification (NOT) contenant lesdites données au domaine de destinataire,
- un moyen (C_DES) dans le domaine de destinataire pour transmettre, en réponse à la réception de la requête de notification, une requête de confirmation de notification (REQC_N) contenant lesdites données au domaine d'expéditeur,
- un moyen (C_EXP) dans le domaine d'expéditeur pour retransmettre la requête de confirmation de notification au domaine d'émetteur, si les données contenues dans la requête de confirmation de notification sont identiques aux données transmises par le domaine d'expéditeur suite à l'authentification de l'expéditeur, et
- un moyen (C_EM) dans le domaine d'émetteur pour transmettre une réponse de confirmation de notification (REPC_N) au domaine de destinataire, en réponse à la réception de la requête de confirmation de notification.

9. Système conforme à la revendication 8, dans lequel les domaines d'émetteur (EM) et d'expéditeur (EXP) sont confondus.

10. Entité (C_EM) dans un domaine d'émetteur (EM) pour contrôler un message (MES) à transmettre par un terminal d'expéditeur (TE) connecté au domaine d'émetteur vers un domaine de destinataire (DES), l'expéditeur étant rattaché à un domaine d'expéditeur (EXP), **caractérisé en ce qu'**elle est adaptée à :

transmettre (E31) une requête de notification (NOT) contenant des données de domaine d'expéditeur au domaine de destinataire, après réception des dites données transmises par le domaine d'expéditeur suite à une authentification de l'expéditeur du message par le domaine d'expéditeur, afin qu'en réponse à la réception de la requête de notification, le domaine de destinataire transmette une requête de confirmation de notification (REQC_N) contenant lesdites données au domaine d'expéditeur, et
à transmettre (E34) une réponse de confirmation de notification (REPC_N) au domaine de destinataire en réponse à la réception de la requête de confirmation de notification qui a été retransmise depuis le domaine d'expéditeur au domaine d'émetteur si les données contenues dans la requête de confirmation de notification sont identiques aux données transmises par le domaine d'expéditeur suite à l'authentification de l'expéditeur.

11. Entité (C_EXP) dans un domaine d'expéditeur (EXP) pour contrôler un message (MES) à transmettre par un terminal d'expéditeur (TE) connecté à un domaine d'émetteur (EM) vers un domaine de destinataire (DES), l'expéditeur étant rattaché au domaine d'expéditeur, **caractérisé en ce qu'**elle est adaptée à :

transmettre (E25) des données de domaine d'expéditeur au domaine d'émetteur, suite à une authentification de l'expéditeur du message par le domaine d'expéditeur, et
à retransmettre (E33) une requête de confirmation de notification (REQC_N) contenant lesdites données au domaine d'émetteur, si les données contenues dans la requête de confirmation de notification sont identiques aux données transmises par le domaine d'expéditeur suite à l'authentification de l'expéditeur, ladite requête ayant été transmise par le domaine de destinataire au domaine d'expéditeur en réponse à la réception d'une requête de notification (NOT) contenant les données transmises par le domaine d'émetteur au domaine de destinataire suite à l'authentification de l'expéditeur, afin que le domaine d'émetteur transmette une réponse de confirmation de notification (REPC_N) au domaine de destinataire.

12. Programme d'ordinateur apte à être mis en oeuvre dans une entité (C_EM) dans un domaine d'émetteur (EM) pour contrôler un message (MES) à transmettre par un terminal d'expéditeur (TE) connecté à un domaine d'émetteur vers un domaine de destinataire (DES), l'expéditeur étant rattaché à un domaine d'expéditeur (EXP), ledit programme étant **caractérisé en ce qu'**il comprend des instructions qui, lorsque le programme est exécuté dans ladite entité, réalisent les étapes de :

transmettre (E31) une requête de notification (NOT) contenant des données de domaine d'expéditeur au domaine de destinataire, après réception des dites données transmises par le domaine d'expéditeur suite à une authentification de l'expéditeur du message par le domaine d'expéditeur, afin qu'en réponse à la réception de la requête de notification, le domaine de destinataire transmette une requête de confirmation de notification (REQC_N) contenant lesdites données au domaine d'expéditeur, et
à transmettre (E34) une réponse de confirmation de notification (REPC_N) au domaine de destinataire en réponse à la réception de la requête de confirmation de notification qui a été retransmise depuis le domaine d'expéditeur au domaine d'émetteur si les données contenues dans la requête de confirmation de notification sont identiques aux données transmises par le domaine d'expéditeur suite à l'authentification de l'expéditeur.

13. Programme d'ordinateur apte à être mis en oeuvre dans une entité (C_EXP) dans un domaine d'expéditeur (EXP) pour contrôler un message (MES) à transmettre par un terminal d'expéditeur (TE) connecté à un domaine d'émetteur vers un domaine de destinataire (DES), l'expéditeur étant rattaché à un domaine d'expéditeur, ledit programme étant **caractérisé en ce qu'**il comprend des instructions qui, lorsque le programme est exécuté dans ladite entité, réalisent les étapes de :

transmettre des données de domaine d'expéditeur au domaine d'émetteur, suite à une authentification de l'expéditeur du message par le domaine d'expéditeur, et

retransmettre (E33) une requête de confirmation de notification (REQC_N) contenant lesdites données au domaine d'émetteur, si les données contenues dans la requête de confirmation de notification sont identiques aux données transmises par le domaine d'expéditeur suite à l'authentification de l'expéditeur, ladite requête ayant été transmise par le domaine de destinataire au domaine d'expéditeur en réponse à la réception d'une requête de notification (NOT) contenant les données transmises par le domaine d'émetteur au domaine de destinataire suite à l'authentification de l'expéditeur, afin que le domaine d'émetteur transmette une réponse de confirmation de notification (REPC_N) au domaine de destinataire.

**Claims**

1. Method for checking a message (MES) to be transmitted to an addressee domain (DES) by a sender terminal (TE) connected to a transmitter domain (EM), the sender being attached to a sender domain (EXP), **characterized in that** it comprises the following steps, subsequent to an authentication of the sender of the message by the sender domain:

transmitting (E25, E31) sender domain data from the sender domain to the transmitter domain and a notification request (NOT) containing said data from the transmitter domain to the addressee domain,

in response to the receipt of the notification request, transmitting (E32) a notification confirmation request (REQC_N) containing said data from the addressee domain to the sender domain,

if the data contained in the notification confirmation request are identical to the data transmitted by the sender domain subsequent to the authentication of the sender, retransmitting (E33) this request from the sender domain to the transmitter domain, and

in response to the receipt of the notification confirmation request, transmitting (E34) from the transmitter domain a notification confirmation response (REPC_N) to the addressee domain.

2. Method in accordance with Claim 1, according to which after receipt of the notification confirmation response (REPC_N), the addressee domain generates (E35) a refusal list (LR), a definitive-agreement list (LAD) and a provisional-agreement list (LAP) including identifiers of the addressees for which the receipt of the message is respectively refused, definitively agreed and provisionally agreed, and transmits (E35) a notification response (R_NOT) containing the lists to the transmitter domain.

3. Method in accordance with Claim 2, according to which if the definitive-agreement list (LAD) includes at least one addressee identifier, the notification response (R_NOT) contains a definitive key (KD) and after having received the notification response, the transmitter domain transmits (E4) an authenticated message (MA) containing the message (MES) and the definitive key (KD) to the addressee domain so that the latter transmits (E5) the message to at least one terminal of an addressee whose identifier is included in the definitive-agreement list, after having validated the definitive key contained in the authenticated message.

4. Method in accordance with Claim 2 or 3, according to which if the provisional-agreement list (LAP) includes at least one identifier of an addressee, at the behest of the addressee domain, the addressee provides an agreement or a refusal to receive the message (MES) to the addressee domain so that the latter transmits the message to the terminal of the addressee.

5. Method in accordance with Claim 4, according to which the addressee domain updates the refusal list and the definitive-agreement list as a function of the agreement or of the refusal provided by the addressee and transmits a second notification response (R_NOT2) containing the updated lists to the transmitter domain.

6. Method in accordance with Claim 5, according to which if in the notification response (R_NOT) the provisional-agreement list (LAP) includes at least one identifier of an addressee and the definitive-agreement list (LAD) is empty, the transmitter domain transmits the message to the addressee domain after having received the second notification response (R_NOT2) containing the updated definitive-agreement list including at least one identifier of an addressee.

7. Method in accordance with any one of Claims 1 to 6, according to which the authentication (E2) of the sender of the message furthermore comprises an authentication of the identity of the sender and a validation of rights necessary to claim the identity by the sender domain, following an exchange of data between the sender domain and the sender terminal.

8. System for checking a message (MES) to be transmitted to an addressee domain (DES) by a sender terminal (TE) connected to a transmitter domain (EM), the sender being attached to a sender domain (EXP), **characterized in that** it comprises:

- a means (C_EXP) in the sender domain for transmitting sender domain data to the transmitter domain, subsequent to an authentication of the sender of the message by the sender domain,
- a means (C_EM) in the transmitter domain for transmitting a notification request (NOT) containing said data to the addressee domain,
- a means (C_DES) in the addressee domain for transmitting, in response to the receipt of the notification request, a notification confirmation request (REQC_N) containing said data to the sender domain,
- a means (C_EXP) in the sender domain for retransmitting the notification confirmation request to the transmitter domain, if the data contained in the notification confirmation request are identical to the data transmitted by the sender domain subsequent to the authentication of the sender, and
- a means (C_EM) in the transmitter domain for transmitting a notification confirmation response (REPC_N) to the addressee domain, in response to the receipt of the notification confirmation request.

9. System in accordance with Claim 8, in which the transmitter domain (EM) and sender domain (EXP) are merged into one.

10. Entity (C_EM) in a transmitter domain (EM) for checking a message (MES) to be transmitted to an addressee domain (DES) by a sender terminal (TE) connected to the transmitter domain, the sender being attached to a sender domain (EXP), **characterized in that** it is adapted for:

transmitting (E31) a notification request (NOT) containing sender domain data to the addressee domain, after receipt of said data transmitted by the sender domain subsequent to an authentication of the sender of the message by the sender domain, so that in response to the receipt of the notification request, the addressee domain transmits a notification confirmation request (REQC_N) containing said data to the sender domain, and transmitting (E34) a notification confirmation response (REPC_N) to the addressee domain in response to the receipt of the notification confirmation request which has been retransmitted from the sender domain to the transmitter domain if the data contained in the notification confirmation request are identical to the data transmitted by the sender domain subsequent to the authentication of the sender.

11. Entity (C_EXP) in a sender domain (EXP) for checking a message (MES) to be transmitted to an addressee domain (DES) by a sender terminal (TE) connected to a transmitter domain (EM), the sender being attached to the sender domain, **characterized in that** it is adapted for:

transmitting (E25) sender domain data to the transmitter domain, subsequent to an authentication of the sender of the message by the sender domain, and
retransmitting (E33) a notification confirmation request (REQC_N) containing said data to the transmitter domain, if the data contained in the notification confirmation request are identical to the data transmitted by the sender domain subsequent to the authentication of the sender, said request having been transmitted by the addressee domain to the sender domain in response to the receipt of a notification request (NOT) containing the data transmitted by the transmitter domain to the addressee domain subsequent to the authentication of the sender, so that the transmitter domain transmits a notification confirmation response (REPC_N) to the addressee domain.

12. Computer program able to be implemented in an entity (C_EM) in a transmitter domain (EM) for checking a message (MES) to be transmitted to an addressee domain (DES) by a sender terminal (TE) connected to a transmitter domain, the sender being attached to a sender domain (EXP), said program being **characterized in that** it comprises instructions which, when the program is executed in said entity, carry out the steps of:

transmitting (E31) a notification request (NOT) containing sender domain data to the addressee domain, after receipt of said data transmitted by the sender domain subsequent to an authentication of the sender of the message by the sender domain, so that in response to the receipt of the notification request, the addressee domain transmits a notification confirmation request (REQC_N) containing said data to the sender domain, and transmitting (E34) a notification confirmation response (REPC_N) to the addressee domain in response to the receipt of the notification confirmation request which has been retransmitted from the sender domain to the transmitter domain if the data contained in the notification confirmation request are identical to the data transmitted by the sender domain subsequent to the authentication of the sender.

13. Computer program able to be implemented in an entity (C_EXP) in a sender domain (EXP) for checking a message (MES) to be transmitted to an addressee domain (DES) by a sender terminal (TE) connected to a transmitter domain, the sender being attached to a sender domain, said program being **characterized in that** it comprises instructions which, when the program is executed in said entity, carry out the steps of:

transmitting sender domain data to the transmitter domain, subsequent to an authentication of the sender of the message by the sender domain, and
retransmitting (E33) a notification confirmation request (REQC_N) containing said data to the transmitter domain, if the data contained in the notification confirmation request are identical to the data transmitted by the sender domain subsequent to the authentication of the sender, said request having been transmitted by the addressee domain to the sender domain in response to the receipt of a notification request (NOT) containing the data transmitted by the transmitter domain to the addressee domain subsequent to the authentication of the sender, so that the transmitter domain transmits a notification confirmation response (REPC_N) to the addressee domain.

**Patentansprüche**

1. Verfahren zum Überprüfen einer von einem mit einer Sender-Domäne (EM) verbundenen Absender-Endgerät (TE) an eine Empfänger-Domäne (DES) zu übertragenden Mitteilung (MES), wobei der Absender mit einer Absender-Domäne (EXP) verknüpft ist, **dadurch gekennzeichnet, dass** es im Anschluss an eine Authentifizierung des Absenders der Mitteilung durch die Absender-Domäne die folgenden Schritte enthält:

Übertragung (E25, E31) von Absender-Domäne-Daten von der Absender-Domäne an die Sender-Domäne und einer die Daten enthaltenden Benachrichtigungsanforderung (NOT) von der Sender-Domäne an die Empfänger-Domäne,
als Antwort auf den Empfang der Benachrichtigungsanforderung, Übertragung (E32) einer die Daten enthaltenden Benachrichtigungsbestätigungsanforderung (REQC_N) von der Empfänger-Domäne an die Absender-Domäne,
wenn die in der Benachrichtigungsbestätigungsanforderung enthaltenen Daten gleich den von der Absender-Domäne im Anschluss an die Authentifizierung des Absenders übertragenen Daten sind, Rückübertragung (E33) dieser Anforderung von der Absender-Domäne an die Sender-Domäne, und
als Antwort auf den Empfang der Benachrichtigungsbestätigungsanforderung, Übertragung (E34) einer Benachrichtigungsbestätigungsantwort (REPC_N) von der Sender-Domäne an die Empfänger-Domäne.

2. Verfahren nach Anspruch 1, gemäß dem nach Empfang der Benachrichtigungsbestätigungsantwort (REPC_N) die Empfänger-Domäne eine Ablehnungsliste (LR), eine endgültige Zustimmungsliste (LAD) und eine vorläufige Zustimmungsliste (LAP) erzeugt (E35), die Kennungen der Empfänger umfassen, für die der Empfang der Mitteilung abgelehnt, ihm endgültig zugestimmt bzw. vorläufig zugestimmt wird, und eine die Listen enthaltende Benachrichtigungsantwort (R_NOT) an die Sender-Domäne überträgt (E35).

3. Verfahren nach Anspruch 2, gemäß dem, wenn die endgültige Zustimmungsliste (LAD) mindestens eine Empfängerkennung umfasst, die Benachrichtigungsantwort (R_NOT) einen endgültigen Schlüssel (KD) enthält, und nach Empfang der Benachrichtigungsantwort die Sender-Domäne eine die Mitteilung (MES) und den endgültigen Schlüssel (KD) enthaltende authentifizierte Mitteilung (MA) an die Empfänger-Domäne überträgt (E4), damit letztere die Mitteilung an mindestens ein Endgerät eines Empfängers überträgt (E5), dessen Kennung in der endgültigen Zustimmungsliste enthalten ist, nachdem der in der authentifizierten Mitteilung enthaltene endgültige Schlüssel validiert wurde.

4. Verfahren nach Anspruch 2 oder 3, gemäß dem, wenn die vorläufige Zustimmungsliste (LAP) mindestens eine Kennung eines Empfängers umfasst, der Empfänger auf Anforderung der Empfänger-Domäne eine Zustimmung oder eine Ablehnung des Empfangs der Mitteilung (MES) an die Empfänger-Domäne liefert, damit diese die Mitteilung an das Endgerät des Empfängers überträgt.

5. Verfahren nach Anspruch 4, gemäß dem die Empfänger-Domäne die Ablehnungsliste und die endgültige Zustimmungsliste in Abhängigkeit von der vom Empfänger gelieferten Zustimmung oder Ablehnung aktualisiert und eine die aktualisierten Listen enthaltende zweite Benachrichtigungsantwort (R_NOT2) an die Sender-Domäne überträgt.

6. Verfahren nach Anspruch 5, gemäß dem, wenn in der Benachrichtigungsantwort (R_NOT) die vorläufige Zustimmungsliste (LAP) mindestens eine Kennung eines Empfängers umfasst und die endgültige Zustimmungsliste (LAD) leer ist, die Sender-Domäne die Mitteilung an die Empfänger-Domäne überträgt, nachdem sie die zweite Benachrichtigungsantwort (R_NOT2) empfangen hat, die die aktualisierte endgültige Zustimmungsliste enthält, die mindestens eine Kennung eines Empfängers umfasst.

7. Verfahren nach einem der Ansprüche 1 bis 6, gemäß dem die Authentifizierung (E2) des Absenders der Mitteilung außerdem eine Authentifizierung der Identität des Absenders und eine Validierung von Rechten enthält, die notwendig sind, um die Identität durch die Absender-Domäne im Anschluss an einen Datenaustausch zwischen der Absender-Domäne und dem Absender-Endgerät zu beanspruchen.

8. System zur Überprüfung einer von einem mit einer Sender-Domäne (EM) verbundenen Absender-Endgerät (TE) an eine Empfänger-Domäne (DES) zu übertragenden Mitteilung (MES), wobei der Absender mit einer Absender-Domäne (EXP) verknüpft ist, **dadurch gekennzeichnet, dass** es enthält:

   - eine Einrichtung (C_EXP) in der Absender-Domäne, um Absender-Domäne-Daten im Anschluss an eine Authentifizierung des Absenders der Mitteilung durch die Absender-Domäne an die Sender-Domäne zu übertragen,
   - eine Einrichtung (C_EM) in der Sender-Domäne, um eine die Daten enthaltende Benachrichtigungsanforderung (NOT) an die Empfänger-Domäne zu übertragen,
   - eine Einrichtung (C_DES) in der Empfänger-Domäne, um als Antwort auf den Empfang der Benachrichtigungsanforderung eine die Daten enthaltende Benachrichtigungsbestätigungsanforderung (REQC_N) an die Absender-Domäne zu übertragen,
   - eine Einrichtung (C_EXP) in der Absender-Domäne, um die Benachrichtigungsbestätigungsanforderung an die Sender-Domäne zurück zu übertragen, wenn die in der Benachrichtigungsbestätigungsanforderung enthaltenen Daten gleich den von der Absender-Domäne im Anschluss an die Authentifizierung des Absenders übertragenen Daten sind, und
   - eine Einrichtung (C_EM) in der Sender-Domäne, um als Antwort auf den Empfang der Benachrichtigungsbestätigungsanforderung eine Benachrichtigungsbestätigungsantwort (REPC_N) an die Empfänger-Domäne zu übertragen.

9. System nach Anspruch 8, bei dem die Sender-Domänen (EM) und Absender-Domänen (EXP) vermischt sind.

10. Entität (C_EM) in einer Sender-Domäne (EM), um eine von einem mit der Sender-Domäne verbundenen Absender-Endgerät (TE) an eine Empfänger-Domäne (DES) zu übertragende Mitteilung (MES) zu überprüfen, wobei der Absender mit einer Absender-Domäne (EXP) verknüpft ist, **dadurch gekennzeichnet, dass** sie geeignet ist, um:

   eine Absender-Domäne-Daten enthaltende Benachrichtigungsanforderung (NOT) nach Empfang der von der Absender-Domäne im Anschluss an eine Authentifizierung des Absenders der Mitteilung durch die Absender-Domäne übertragenen Daten an die Empfänger-Domäne zu übertragen (E31), damit die Empfänger-Domäne als Antwort auf den Empfang der Benachrichtigungsanforderung eine die Daten enthaltende Benachrichtigungsbestätigungsanforderung (REQC_N) an die Absender-Domäne überträgt, und
   eine Benachrichtigungsbestätigungsantwort (REPC_N) als Antwort auf den Empfang der Benachrichtigungsbestätigungsanforderung, die von der Absender-Domäne an die Sender-Domäne zurück übertragen wurde, an die Empfänger-Domäne zu übertragen (E34), wenn die in der Benachrichtigungsbestätigungsanforderung enthaltenen Daten gleich den von der Absender-Domäne im Anschluss an die Authentifizierung des Absenders übertragenen Daten sind.

11. Entität (C_EXP) in einer Absender-Domäne (EXP), um eine von einem mit einer Sender-Domäne (EM) verbundenen Absender-Endgerät (TE) an eine Empfänger-Domäne (DES) zu übertragende Mitteilung (MES) zu überprüfen, wobei der Absender mit der Absender-Domäne verknüpft ist, **dadurch gekennzeichnet, dass** sie geeignet ist, um:

Absender-Domäne-Daten im Anschluss an eine Authentifizierung des Absenders der Mitteilung durch die Absender-Domäne an die Sender-Domäne zu übertragen (E25), und

eine die Daten enthaltende Benachrichtigungsbestätigungsanforderung (REQC_N) an die Sender-Domäne zurück zu übertragen (E33), wenn die in der Benachrichtigungsbestätigungsanforderung enthaltenen Daten gleich den von der Absender-Domäne im Anschluss an die Authentifizierung des Absenders übertragenen Daten sind, wobei die Anforderung von der Empfänger-Domäne an die Absender-Domäne als Antwort auf den Empfang einer die von der Sender-Domäne an die Empfänger-Domäne im Anschluss an die Authentifizierung des Absenders übertragenen Daten enthaltenden Benachrichtigungsanforderung (NOT) übertragen wurde, damit die Sender-Domäne eine Benachrichtigungsbestätigungsantwort (REPC_N) an die Empfänger-Domäne überträgt.

**12.** Computerprogramm, das in einer Entität (C_EM) in einer Sender-Domäne (EM) angewendet werden kann, um eine von einem mit einer Sender-Domäne verbundenen Absender-Endgerät (TE) an eine Empfänger-Domäne (DES) zu übertragende Mitteilung (MES) zu überprüfen, wobei der Absender mit einer Absender-Domäne (EXP) verknüpft ist, wobei das Programm **dadurch gekennzeichnet ist, dass** es Anweisungen enthält, die, wenn das Programm in der Entität ausgeführt wird, die folgenden Schritte durchführen:

Übertragung (E31) einer Absender-Domäne-Daten enthaltenden Benachrichtigungsanforderung (NOT) an die Empfänger-Domäne nach Empfang der von der Absender-Domäne im Anschluss an eine Authentifizierung des Absenders der Mitteilung durch die Absender-Domäne übertragenen Daten, damit die Empfänger-Domäne als Antwort auf den Empfang der Benachrichtigungsanforderung eine die Daten enthaltende Benachrichtigungsbestätigungsanforderung (REQC_N) an die Absender-Domäne überträgt, und

Übertragung (E34) einer Benachrichtigungsbestätigungsantwort (REPC_N) an die Empfänger-Domäne als Antwort auf den Empfang der Benachrichtigungsbestätigungsanforderung, die von der Absender-Domäne an die Sender-Domäne zurück übertragen wurde, wenn die in der Benachrichtigungsbestätigungsanforderung enthaltenen Daten gleich den von der Absender-Domäne im Anschluss an die Authentifizierung des Absenders übertragenen Daten sind.

**13.** Computerprogramm, das in einer Entität (C EXP) in einer Absender-Domäne (EXP) angewendet werden kann, um eine von einem mit einer Sender-Domäne verbundenen Absender-Endgerät (TE) an eine Empfänger-Domäne (DES) zu übertragende Mitteilung (MES) zu überprüfen, wobei der Absender mit einer Absender-Domäne verknüpft ist, wobei das Programm **dadurch gekennzeichnet ist, dass** es Anweisungen enthält, die, wenn das Programm in der Entität ausgeführt wird, die folgenden Schritte durchführen:

Übertragung von Absender-Domäne-Daten an die Sender-Domäne im Anschluss an eine Authentifizierung des Absenders der Mitteilung durch die Absender-Domäne, und Rückübertragung (E33) einer die Daten enthaltenden Benachrichtigungsbestätigungsanforderung (REQC_N) an die Sender-Domäne, wenn die in der Benachrichtigungsbestätigungsanforderung enthaltenen Daten gleich den von der Absender-Domäne im Anschluss an die Authentifizierung des Absenders übertragenen Daten sind, wobei die Anforderung von der Empfänger-Domäne an die Absender-Domäne als Antwort auf den Empfang einer Benachrichtigungsanforderung (NOT) übertragen wurde, die die von der Sender-Domäne an die Empfänger-Domäne im Anschluss an die Authentifizierung des Absenders übertragenen Daten enthält, damit die Sender-Domäne eine Benachrichtigungsbestätigungsantwort (REPC_N) an die Empfänger-Domäne überträgt.

# FIG. 1

# FIG. 2

**EP 2 092 703 B1**

## RÉFÉRENCES CITÉES DANS LA DESCRIPTION

**Documents brevets cités dans la description**

- WO 2005025177 A